Europäisches Patentamt

European Patent Office

Office européen des brevets

(11) Publication number : **0 486 310 A2**

# (12) EUROPEAN PATENT APPLICATION

(21) Application number : **91310537.5**

(22) Date of filing : **14.11.91**

(51) Int. Cl.⁵ : **G11B 27/10, G11B 27/28**

(30) Priority : **16.11.90 JP 308497/90**

(43) Date of publication of application :
**20.05.92 Bulletin 92/21**

(84) Designated Contracting States :
**DE FR GB**

(71) Applicant : **CANON KABUSHIKI KAISHA**
**30-2, 3-chome, Shimomaruko, Ohta-ku**
**Tokyo (JP)**

(72) Inventor : **Ikeda, Keiichi**
**5-2-101, Suge-inadazutsumi 2-chome,**
**Tama-ku**
**Kawasaki-shi, Kanagawa-ken (JP)**

(74) Representative : **Beresford, Keith Denis Lewis**
**et al**
**BERESFORD & Co. 2-5 Warwick Court High**
**Holborn**
**London WC1R 5DJ (GB)**

(54) **Method and system for reproducing images.**

(57)    An image reproducing system for reading out and reproducing an image from a storage medium in which a plurality of image data are stored, comprises an instruction device for instructing to read out image data stored in the storage medium and an index display device for displaying a plurality of index images representing a plurality of image data stored in the storage medium in response to the reading instruction by the instruction device. A method for reading out and reproducing image data of a storage medium in which a plurality of image data as well as identification information are stored, reading out a plurality of image data and identification information corresponding to each image data recorded in a storage medium and displaying a plurality of images on one screen respectively corresponding to a plurality of read-out image data. When a desired image of the plurality of displayed images is indicated, the image data corresponding to the indicated image is read out from the storage medium and then displayed on a monitor.

FIG. 1

EP 0 486 310 A2

## BACKGROUND OF THE INVENTION

### 1. Field of the Invention

The present invention relates to a method and system for reproducing and reading out desired image signals from a plurality of image data stored in a storage medium and reproducing images.

### 2. Description of the Related Art

In the prior art, when image signals recorded in a still video floppy disk are retrieved and read out by a computer, etc, the computer first reads out ID information on images recorded in each track of a still video floppy disk and then the track in which a required image is recorded is decided from this ID information and the desired image is read from the track. When desired image data cannot be retrieved by using only ID information, an image recorded in each track is reproduced and displayed and an operator views the reproduced images and selects desired one, and the desired image is input to the computer.

In the above-described prior art, however, there is a drawback in that each time image data is retrieved, the ID information of each track must be input to a computer. Also, sometimes it cannot be determined whether desired image data has been obtained from only ID information. In such a case, in order to determine whether it is an image the operator requires, the image data of each track must be reproduced on a monitor for confirmation purposes. Thus, there is a problem in that a process for retrieving images becomes complicated.

## SUMMARY OF THE INVENTION

The present invention has been accomplished to solve the above-mentioned problems of the prior art.

An object of the present invention is to provide a method and system for reproducing images which is capable of confirming the contents of a plurality of image data stored in a storage medium.

To this end, according to the present invention, there is provided an image reproduction system which reads image data from a storage medium in which a plurality of image data are stored, comprising: instruction means for instructing to read out image data stored in the storage medium, when it detects that the storage medium has been exchanged; and an index display means for displaying a plurality of index images representing a plurality of image data stored in the storage medium in response to a command instructed by the instruction means.

Another object of the present invention is to provide a method and system for reproducing images, in which reproduction of a desired image is simplified by displaying a plurality of image data recorded in a storage medium.

To this end, according to the present invention, there is provided a method for reproducing images, comprising the steps of: reading out a plurality of image data and identification information corresponding to each of the plurality of image data recorded in the storage medium; displaying a plurality of images on one screen respectively corresponding to a plurality of read-out image data; indicating a desired image of a plurality of displayed images; and displaying an image by reading out the image data corresponding to the indicated image from the storage medium.

Another object of the present invention is to provide a system for reproducing images, in which the contents of image data recorded in a storage medium are displayed automatically when the storage medium is exchanged.

A further object of the present invention is to provide a method for reproducing images, in which each brightness signal of a plurality of image data stored in a storage medium is read; the brightness signals are thinned out and displayed as an index image, so that the amount of image data required for index display is decreased and many index images can be displayed on a screen at high speed and efficiency.

A still further object of the present invention is to make it possible to select desired image data on a screen by displaying index images of a plurality of image data at one time.

An other object of the present invention is to provide a system for reproducing, which can process the ADCT coded image data.

Other features and advantages of the present invention will be apparent from the following description taken in conjunction with the accompanying drawings, in which like reference characters designate the same or similar parts throughout the figures thereof.

## BRIEF DESCRIPTION OF THE DRAWINGS

Fig. 1 is a block diagram which illustrates a schematic construction of an image reading system of an embodiment;

Figs. 2A and 2B are flowcharts which illustrate a multi-image computer transferring process in the image reading system of the embodiment;

Fig. 3 is a view which illustrates a displayed example of monochrome multi-images used to retrieve images by computer; and

Fig. 4 is a flowchart which illustrates an image retrieving process in a computer.

Fig. 5 is a block diagram which illustrates a schematic construction of an image reading apparatus of another embodiment.

Fig. 6 is a view which illustrates a data format of a compressed image data in another embodiment.

Figs. 7A and 7B are views which explain a switch for exchange detection in a video reproducer; and.

Figs. 8A and 8B are flowcharts which illustrate image transferring process in the image reading apparatus of another embodiment.

## DESCRIPTION OF THE PREFERRED EMBODIMENTS

Preferred embodiments of the present invention will be explained below with reference to the accompanying drawings.

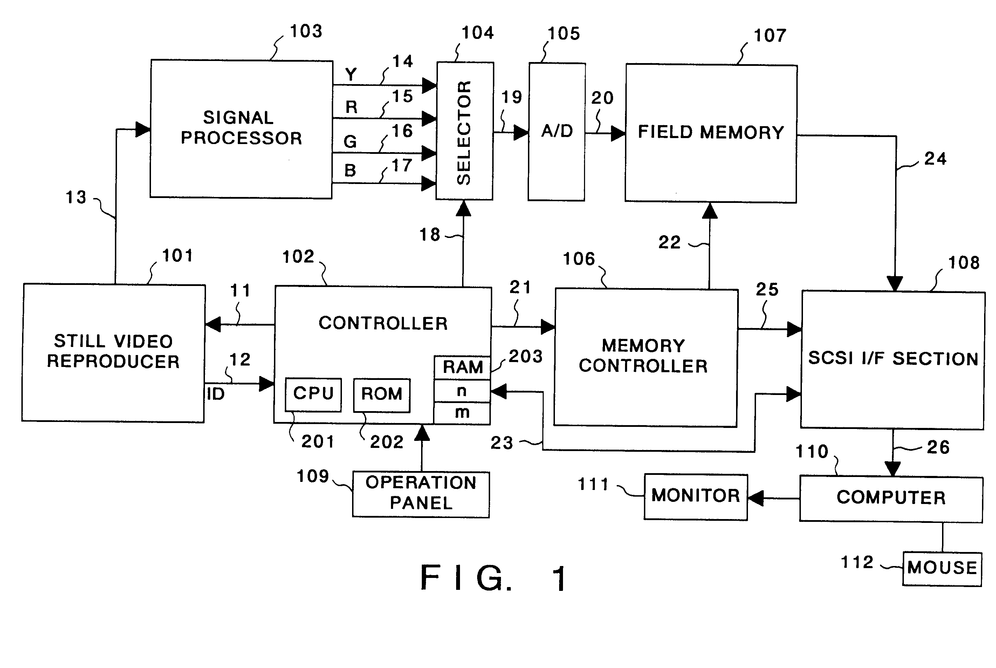

Fig. 1 is a block diagram which illustrates a schematic construction of an image reading system of this embodiment. In this figure, reference numeral 101 denotes a still video reproducer which performs the following: the rotation of tracks, reproduction of video signals, reading out of image data, erasure of still video floppy disks and so on, on the basis of the control signals inputted from the controller 102. The still video reproducer 101 also transfers ID information 12 read out from the still video floppy disk to the controller 102. Still video reproduction signals 13 read out from the still video floppy disk are sent to a signal processor 103. The signal processor 103 inputs reproduction signals 13 inputted from the still video reproducer 101 and produces brightness signals (Y) 13 and color (R, G and B) signals 15 to 17 by using a well-known matrix circuit by performing demodulation of reproduced signals, signal processing, synchronization of color difference, etc. Each of reference numerals 14 to 17 respectively denotes Y (brightness signals), R (red component signals), G (green component signals) and B (blue component signals) produced from still video reproduction signals 13 in the signal processor 103. A selector 104 selects and outputs each of the signals 14 to 17 according to a selection signal 18 from the controller 102. The selected signal is made to be a signal 19 and supplied to an A/D converter 105. The A/D converter 105 converts the signals 19 from the selector 104 to digital signals. Reference numeral 106 denotes a memory controller which outputs memory control signals 22 on the basis of control signals 21 from the controller 102 so that digital image signals 20 which are converted from analog to digital by the A/D converter 105 are stored in a field memory 107 or the field memory 107 is read out.

The memory controller 106 can also transfer image data stored in the field memory 107 to a computer 110 externally connected through a standard SCSI (small computer systems interface) cable 26 by controlling an SCSI interface section 108 with control signals 25. Reference numeral 24 denotes image data read out from the field memory 107 to the SCSI interface section 108; and reference numeral 26 denotes a SCSI cable through which the SCSI interface section 108 is connected to the computer 110. The structure of the field memory 107 has a memory capacity of, for example, 640 x 240 x 8 (bits).

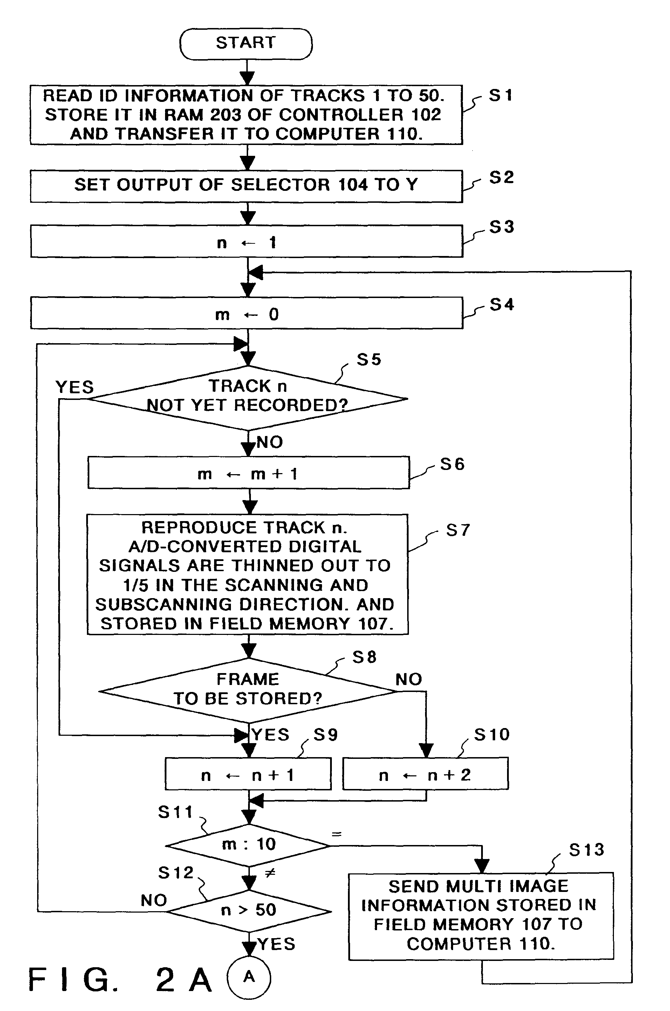

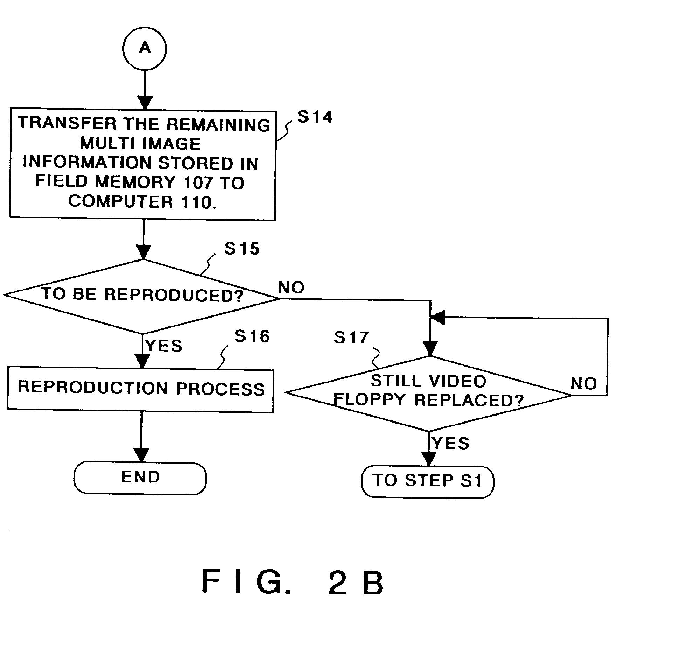

The controller 102 controls the entire image reading apparatus. It comprises a CPU 201 (microprocessor), ROM 202 in which control programs for the CPU 201 shown in the flowchart in Figs. 2A and 2B and various data are stored and RAM 203 used as a work area for the CPU 201. A track counter n to be described later and an image counter m or the like are provided in the RAM 203. Reference numeral 109 denotes an operation panel having various keys by which an instruction that image signals be read out from the still video reproducer 101 is made to the controller 102.

Referring to the flowchart in Figs. 2A and 2B, the operation of the image reading system of this embodiment will be explained below. A control program, on the basis of which this process is performed, is stored in the ROM 202. This program is started when a still video floppy disk is exchanged in the still video reproducer 101 or an instruction is given from the operation panel 109 that image signals are read out from the still video floppy disk.

First, in step S1, ID information of tracks 1 to 50 of a floppy disk is read out by the still video reproducer 101 under the control of the controller 102. The ID information 12 is input and stored in the RAM 203 of the controller 102. Thereafter, the ID information is transferred through the SCSI interface section 108 to the computer 110 connected via a SCSI cable 26. Then, the selection signal 18 supplied to the selector 104 so that the selector 104 is set so as to select and output the brightness signal (Y) 14. Next, the process proceeds to step S3 where the track counter n is set at "1", and to step S4 where the image counter m is set at "0".

In step S5, the still video reproducer 101 reads out the track of the video floppy disk indicated by the track counter n, and a check is made to determine whether image data has been stored in the track. If image data has not been stored, the process proceeds to step S9. If it has been, the process proceeds to step S6 where the image counter m is incremented by 1. In step S7, image signals are read out from the track of the video floppy disk indicated by the track counter n. The reproduced signals 13 are sent to the signal processor 103 by the still video reproducer 101. Brightness signals (Y) 14 are selected by the selector 104 and output to the A/D converter 105. The controller 102 controls the memory controller 106 so that image signals converted to digital by the A/D converter 105 are thinned out to 1/5 in the main scanning and sub-scanning directions and stored in the field memory 107.

Next, in step S8, a check is made to determine whether the image data stored in this track is a frame record. When it is, the process proceeds to step S9 where only one of the field images is stored in the field memory 107, and the track counter n is incremented by 1. On the other hand, if it is not a frame record, the process proceeds to step S10 where the track counter n is incremented by 2. Thereafter, in step S11, a check is made to determine whether the value of the image counter m has reached "10". When m = 10, namely, when image data of as much as 10 images have been stored in the field memory 107, the process proceeds to step S13 where the image data of 10 images is transferred to the computer 110 via the SCSI interface section 108. Thereafter, the process returns to step S4 where the above: described process is performed.

On the other hand, when the value of the image counter m is not "10", the process proceeds to step S12 where a check is made to determine whether the value of the track counter n is equal to "50" or greater. If it is less than "50", the process returns to step S5 and then to a process for reading out the image data of the next track of the video floppy disk. If it is equal to "50" or greater, the process proceeds to step S14 where the remaining image data stored in the field memory 107 is transferred to the computer 110 via the SCSI interface section 108. In this way, the contents of the field memory 107 are transferred to the computer 110 a maximum of 50 times (when image data has been stored in all of 50 tracks of the still video in field record form).

In step S15, a check is made to determine whether reproduction of an image has been instructed by the computer 110. If reproduction of an image has been instructed, the process proceeds to step S16 where the image data corresponding to the specified ID information is read out by the still video reproducer 101, transferred to the computer 110 via the SCSI interface section 108 and displayed on a monitor 111. On the other hand, if the reproduction has not been instructed, the process proceeds to step S17 where a check is made to determine whether the still video floppy disk of the still video reproducer 101 has been exchanged. When it is exchanged, the process returns to step S1 where the above-described operations are performed.

The ID information and the image brightness data (Y) transferred to the computer 110 in the above-described way are used as information for the computer 110 to manage floppy disks. That is, the computer 110 creates an index image of all images of a still video floppy disk from image data which have been divided and transferred. Data used to manage still video floppy disks is created by corresponding information, such as track numbers, picture taking year/month/day, frame/field record, etc., obtained from the ID information of the index image, to each of these index images.

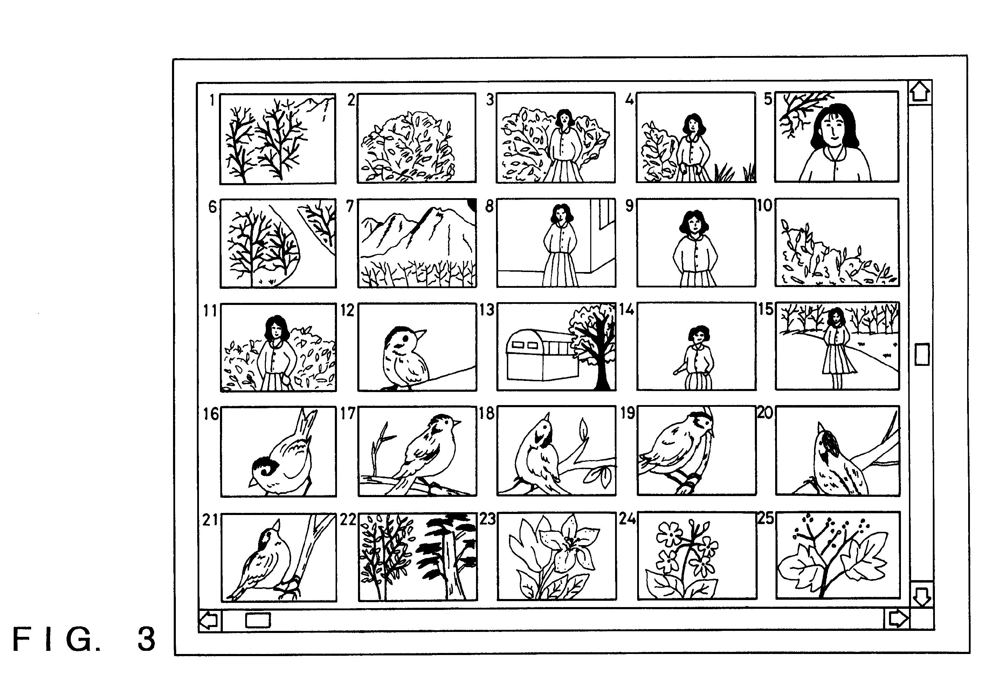

An example will now be described regarding an image retrieving process by the computer 110. When an still video floppy disk is exchanged in the still video reproducer 101, or when there is a command from the operation panel 109, the image reading apparatus of this embodiment transfers each ID information and brightness information (Y) to the computer 110. The application software of the computer 110 creates data used to manage floppy disks on the basis of both the ID information and the brightness information (Y). The index image as well as track numbers, on the track of which the image is recorded, are displayed on the monitor 111. An example of a screen display at this time is shown in Fig. 3.

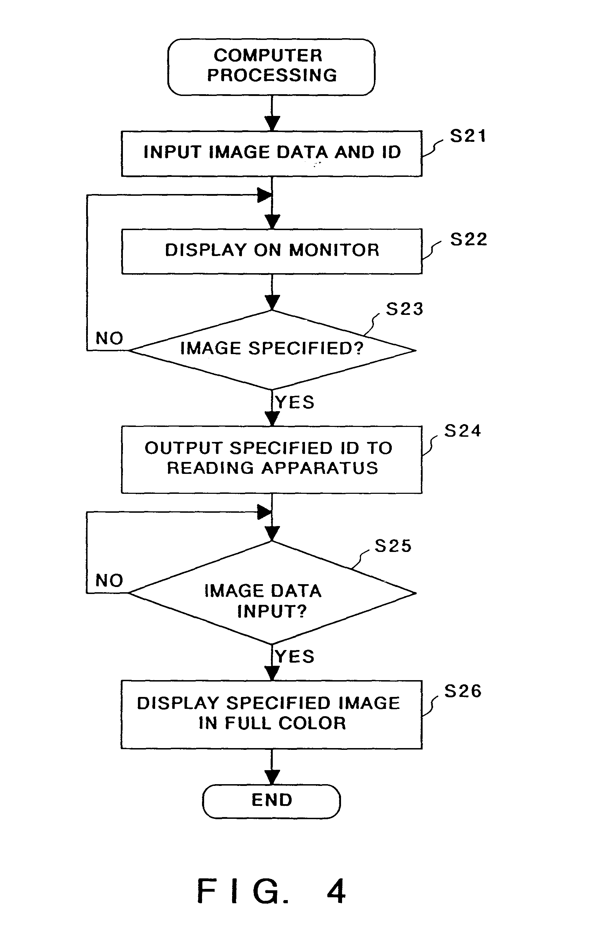

Fig. 4 is a flowchart which illustrates an image retrieving process in the computer 110. In step S21, image data (binary image) sent via the SCSI cable 26 and ID information corresponding to the data are input. Those images are displayed on the monitor 111, as shown in Fig. 3. Next, in step S23, the system waits for an operator indicates which image is to be retrieved. In order to select a desired image, the operator moves a cursor or the like over the image displayed on the monitor 111 by using a mouse 112 connected to the computer 110. When the desired image is indicated by the cursor on the monitor 111 and clicking the button of the mouse 112, the process proceeds to step S24 where the ID information of the indicated image is transmitted via the SCSI cable 26 to the image reading apparatus of the embodiment shown in Fig. 1.

As a result, the controller 102 of the image reading apparatus gives an command to the still video reproducer 101 that image data corresponding to the ID information is read out from the still video floppy disk. RGB signals 15 to 17 of the image data are sequentially selected by the selector 104 and written in the field memory 107. Then, a color image thereof is in turn read out from the field memory 107 and transferred to the computer 110 via the SCSI interface section 108 and the SCSI cable 26. As a result, the process proceeds from step S25 to step S26 where the image data specified in step S23 is input to the computer 110 as a full color image having the three colors of R, G and B and displayed on the monitor 111 in full color.

Although in Fig. 3, images of only 25 tracks are displayed on the monitor 111, all of the images of 50 tracks can be confirmed by scrolling the screen. Although in the above-described embodiment, data used to display an index image is created by the image reading apparatus, it may be created by the computer 110. At that time, however, since image data at a maximum of 50 pieces must be transferred to the computer 110 via the SCSI interface section 108, a transferring time takes about 10 times that in this embodiment.

As has been explained above, according to this embodiment, each time a still video floppy disk of an image reading apparatus is exchanged, or when a command is given by an operation panel, a multi image produced from the ID information of each track and the brightness information recorded in each track is transferred to a computer. Thereafter, the computer displays these multi images as an index and waits for an indication thereof to be made. Images recorded in a video floppy disk are managed and retrieved on the basis of the ID information of each track of the indicated image data. As a consequence, the efficiency of operation and response of the retrieval of the image data stored in the video floppy disk can be increased.

In addition, there is an advantage in that since multi images are produced from only brightness information recorded in each track, the time required to transfer the multi images to the computer can be shortened.

Although in the above-described embodiment, the transfer of multi images is performed when a video floppy disk is exchanged or by a command from the operation panel, the present invention is not limited to this case. It goes without saying that it may be performed, for example, by a command from the computer 110.

Next, another embodiment of the present invention will be explained. In this embodiment, a video reproducer 501 may have not only a floppy disk, but also a semiconductor memory or a hard disk in order to store the digital image.

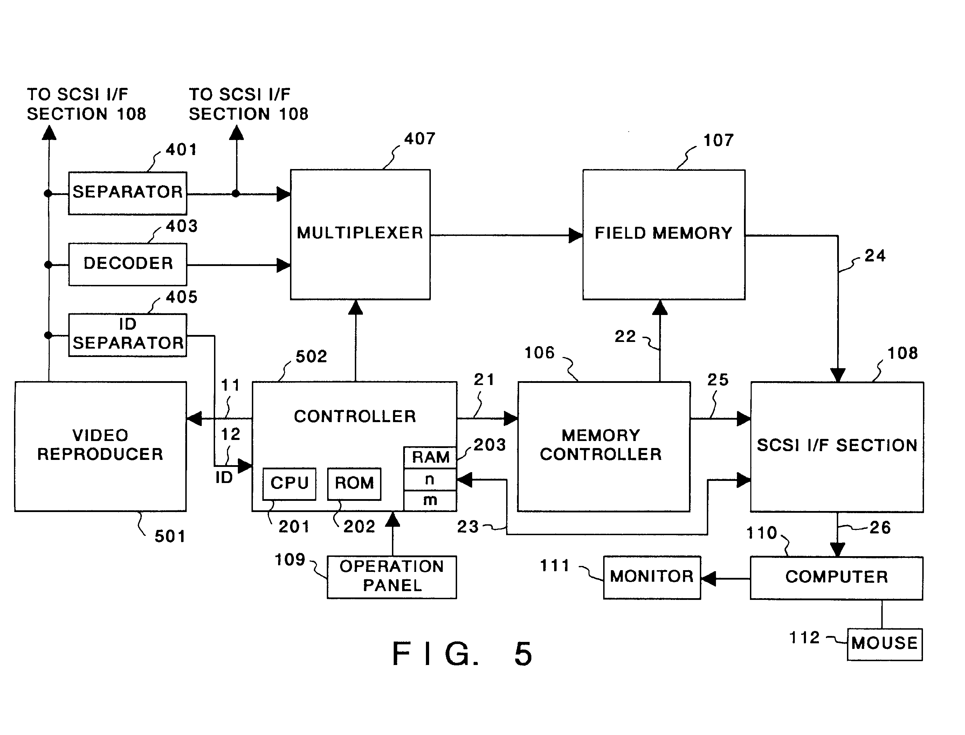

In Fig. 5, the video reproducer 501 is a reproducer which reproduces an image data encoded in block and stored in a storage medium compressed by the compressing method, for example, ADCT. (Adaptive Discrete Cosine Transform) set by JPEG (Joint Picture EXpert Group). Storage medium in this embodiment can be disk memory, or solid memory such as optical memory, Bloch line memory, semiconductor memory, and the like.

This video reproducer 501 reproduces a compressed image data from a storage medium and outputs the data to the line 409. As for the image data output to this line 409, direct current, e.g. lowest spatial frequency components (DC component) are separated by the separator 401 and input to the multiplexer 407. Also, the image data output to the line 409 is output to the decoder 403. The decoder 403 decodes the compressed data output to the line 409 and supplies to the decoded data to the multiplexer 407. The multiplexer 407 selects an output of either separator 401 or decoder 403 under the control of a controller 502 and outputs to the field memory 107.

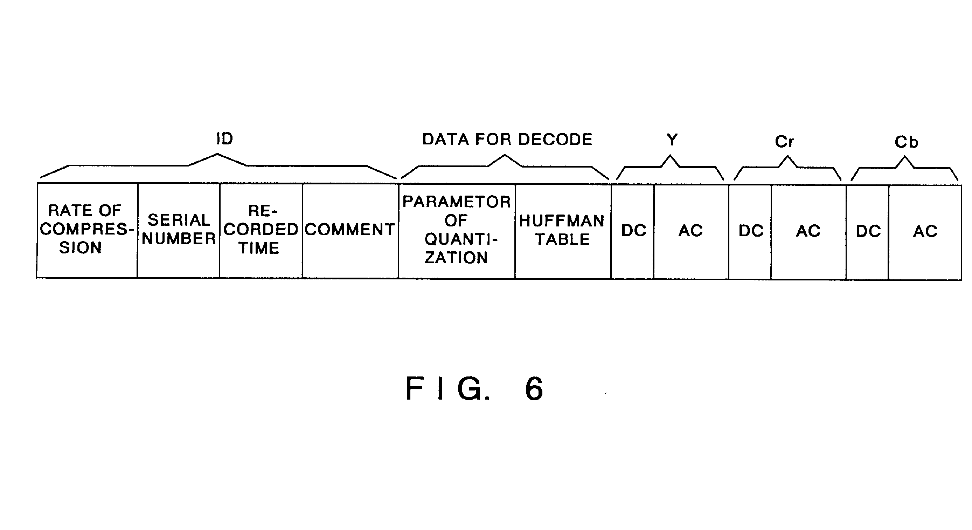

Further, the compressed image data is allowed to an ID data which indicates its compressibility, serial numbers of images, recorded date, comment on the recorded images, and the like. This function will be mentioned later with reference to Fig. 6. The ID data is separated by the ID separator 405 and output to the controller 502. The reproduced image from the video reproducer 501 is directly output to SCSI interface section 108 via the line 409 without going through the separator 401, the decoder 403 and ID separator 405.

Referring to Fig. 6, then, a data format of the compressed data in the embodiment shown in Fig. 5 is explained.

In Fig. 6, there is said ID data in forefront of the image data, and then, data for decode, for example, quantization parameter (to be mentioned later), or Huffmann table is followed. Further, following to this data for decode, DC data (Direct current component) of brightness component Y in which one block data comprising 8 X 8 picture elements has converted by orthogonal transformation, AC data (Alternating current component), DC data (Direct current component) of the color component Cr, Cb, and AC data (Alternating current component) are stored in the block unit.

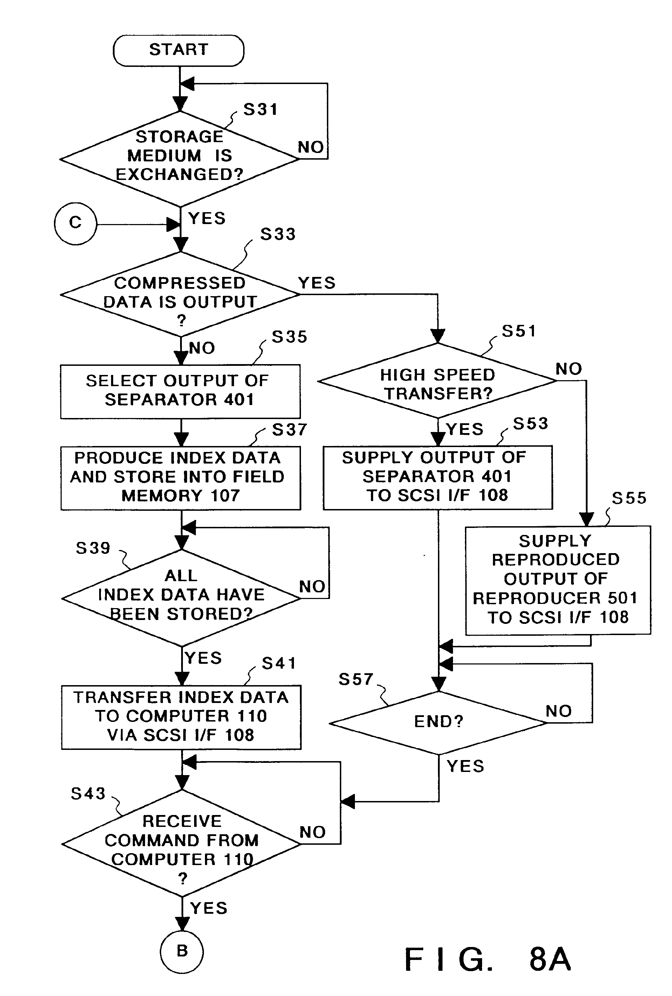

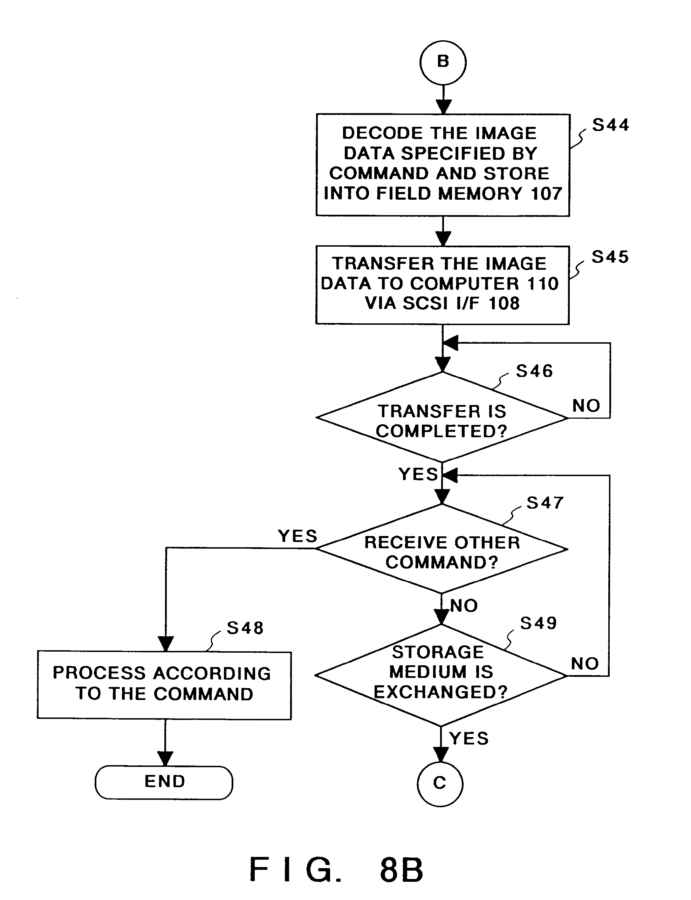

Then, the operation of the video reproducing system in this embodiment is explained in detail with reference to the flowchart of Fig. 8A and 8B.

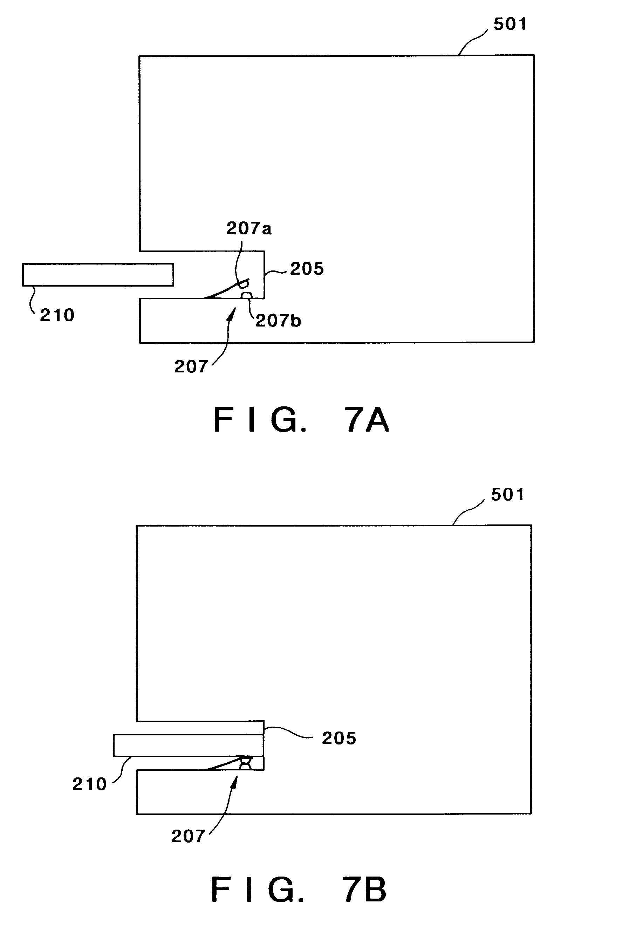

In Fig. 8A and 8B, a check is made to detect whether a storage medium 210 has been exchanged in step S31 on the basis of a state of a switch 207. The construction of this switch 207 is shown in Fig. 7A and 7B. The switch 207 is having point of contacts, 207a and 207b. As shown in Fig. 7A, when the storage medium 210 is taken out from the attaching section 205 of the video reproducer 501, the point of contact 207a and 207b are separated from each other and a state of the switch 207 becomes "off." On the other hand, as shown in Fig. 7B, when the storage medium 210 is attached to the attaching section 205 of the video reproducer 501, the point of contact 207a and 207b of the switch 207 are contacted and a state of the switch 207 becomes "on." Therefore, when the state of the switch 207 changed from "on" to "off" and again, turned to "on," it can be recognized that the storage medium 201 has exchanged.

Then, the process proceeds to step S33 where a check is made on an output mode. Output mode at that time can be set at output mode of the compressed data or output mode of decoded data. When output mode of the compressed data is set, the process proceeds to step S51 where a check is made to determine whether a mode is set at high speed output mode. If so, the process proceeds to step S53 and the output of the separator 401 is directly output to the computer 110 via SCSI interface section 108; not via the field memory 107. As a result of this process, the image data can be reproduced at high speed in the computer 110 by that only direct current component and quantization parameter in the image data are sequentially transferred to the computer 110.

On the other hand, when a mode is not set at high speed output mode in step S51, the process proceeds to step S55 and the compressed data reproduced from the storage medium 210 is transferred to the computer 110 via the SCSI interface section 108. The process is then proceeded to step S57 where a check is made to determine whether the data is output for predetermined number of screens in advance. When this process has accomplished, the process proceeds to step S47 which will be mentioned later from step S46.

On the other hand, in step S33, in the case of that a mode is not at the output mode of the compressed data, the process proceeds to step S35 where the multiplexer 407 is controlled, and the data from the separator 401 is selected and output to the field memory 107. In this way, index data, that is, reduced image data is stored in the field memory 107 in step S37. Thereafter, multi-index images such as shown in Fig. 3 are stored up. When all index image data have stored, the process proceeds to step S41 from S39 where the index image data is transferred to the computer 110 via the SCSI interface section 108. Then, the process proceeds to step S43, a command which instructs to read out desired image data from the computer 110 is waited after transfer.

When the command is input and the desired image data is indicated, the process proceeds to step S44 where the desired image data is read out in the video reproducer 501, decoded in the decoder 403, and stored in the field memory 107. Then, the process proceeds to step S45 where the stored image data is transferred to the computer 110 via the SCSI interface section 108. After this transfer, the process proceeds to step S48 where a check is made to determine if there is any other command from the computer 110. When there is another command, the process proceeds to step S48 where a process corresponding to the command is executed. When no other command is input, the process proceeds to step S49 where a check is made to determine whether a storage medium 210 is exchanged on the basis of a state of the switch 207. When the exchange of the storage medium 210 is confirmed, the process returns to step S33 where the above-mentioned process is performed. While when the exchange is not confirmed, the process returns to step S47 where the processes at step S47 and S49 are repeatedly performed.

As explained above, in this embodiment, contents of the image data stored in the storage medium 210 is transferred to the computer 110 at high speed and confirmed in short time since exchange of the storage medium 210 is detected and index image data or compressed image date is output to the computer 110.

In this embodiment, in the case of that particularly high speed output is selected, the image data can be transferred to the computer 110 simply and at high speed, since only direct current component of the encoded image data is output the the computer 110.

In addition, in this embodiment, in judgement in step S33 and S51 in the flowchart of Fig. 8A and 8B, the controller 502 may determine the function of the computer 110 in advance. It may also be performed according to the input data from the operation panel by manual input.

Further, the data separated in the separator 401 can be direct current component of only brightness component Y or both brightness component Y and color component Cr, Cb.

Still further, since the operation of the computer 110 in this another embodiment is similar to the one in the flowchart of Fig. 4, explanation for the operation for this embodiment is omitted.

The present invention may be applied to a system comprising a plurality of apparatuses or to a system comprising one apparatus. Needless to say, the present invention can be applied to a case in which programs by which the present invention is performed are supplied to a system or apparatus.

As many widely different embodiments of the present invention can be made without departing from the spirit and scope thereof, it is to be understood that the invention is not limited to the specific embodiments thereof except as defined in the appended claims.

## Claims

1. An image reproducing system for reading out and reproducing an image from a storage medium in which a plurality of image data are stored, comprising:

   instruction means for instructing to read out image data stored in the storage medium, when it detects that the storage medium has been exchanged; and

   index display means for displaying a plurality of index images representing a plurality of image data stored in the storage medium in response to a command instructed by said instruction means.

2. An image reproducing system according to claim 1, wherein the storage medium is a magnetic floppy disk.

3. An image reproducing system according to claim 1, wherein said index display means reads out brightness signals of a plurality of image data stored in the storage medium, thins out the brightness signals thereof and displays them as the index images.

4. An image reproducing system according to claim 1, further comprising: indicating means for indicating any one of a plurality of index images; reading means for reading out image data from the storage medium corresponding to the index image indicated by said indicating means; and image display means for displaying the image data read out by said reading means.

5. An image reproducing system according to claim 4, wherein the storage medium is a floppy disk.

6. An image reproducing system for reading out and reproducing an image from a storage medium in which a plurality of image data as well as identification information are stored, comprising:

   reading means for reading out a plurality of image data recorded in the storage medium and identification information corresponding to each image data from the storage medium, said reading means operates in response to an exchange of the storage medium;

   display means for displaying each of a plurality of images on one screen respectively corresponding to a plurality of image data read out by said reading means;

   indicating means for indicating a desired image of the plurality of images displayed by said display means; and

   image display means for reading out the image data corresponding to the image indicated by said indicating means and displaying the image data.

7. An image reproducing system according to claim 6, wherein said display means further thins out brightness signals of a plurality of image data and displays them as reduced images.

8. An image reproducing system according to claim 6, wherein the storage medium is a magnetic floppy disk.

9. An image reproducing system according to claim 8, wherein said image display means corresponds track numbers and frame/field information obtained from the identification information to the image, and reads out the image data indicated by said indicating means.

10. A method for reading out and reproducing image data of a storage medium in which a plurality of image data as well as identification information are stored, comprising the steps of:

    reading out a plurality of image data and identification information corresponding to each of the plurality of image data recorded in the storage medium, in response to an exchange of said storage medium;

    displaying a plurality of images on one screen respectively corresponding to a plurality of read-out image data;

    indicating a desired image of a plurality of displayed images; and

    displaying an image by reading out the image data corresponding to the indicated image from the storage medium.

11. A method for reproducing an image according to claim 10, wherein the plurality of images on one screen respectively corresponding to each of the plurality of image data are reduced images obtained by thinning out the brightness signals of corresponding image data.

12. A method for reproducing an image according to claim 11, wherein in the step of displaying an image, image data corresponding to an indicated image is read out by a method in which track numbers and frame/field information obtained from the identification information are correlated to the image.

13. An image reproducing system for reproducing image data from a storage medium in which a plurality of image data are stored, comprising:

    instruction means for instructing to read out image data stored in the storage medium in response to an exchange of said storage medium;

    a reading circuit for reading out brightness signals of a plurality of image data stored in the storage medium in response to a reading instruction by the instruction means;

    a memory for storing the brightness signals read out by said reading circuit as index images;

    a monitor display for displaying at one time a plurality of index images stored in said memory;

    a pointing device for specifying any of the plurality of index images displayed on said monitor display;

    a video reproducer for reading out image data from the storage medium corresponding to the index image indicated by said pointing device; and

    an image display for displaying the image data reproduced by said video reproducer on said monitor display.

14. An image reproducing system, comprising:

    reproducing means for reproducing an index image data from an image storage medium;

    detecting means for detecting an exchange of said image storage medium; and

    means for operating said reproducing means in accordance with said detecting means.

15. An image reproducing system according to claim 14, wherein said image storage medium is a semiconductor memory.

16. An image reproducing system according to claim 14, compressed image data is stored in said image storage medium, and said index image data comprises a part of said compressed image data.

17. An image reproducing system according to claim 14, wherein said detecting means comprise at least one mechanical switch which detects an exchange of said image storage means.

18. An image reproducing system according to claim 16, wherein said reproducing means includes;
   a separator for separating the part of compressed image data.

19. An image reproducing system according to claim 16, wherein said compressed image data includes DC component and AC component of said compressed image data.

20. An image storage and/or filing and/or reproduction system comprising means for reading image filing data from a digital store and means for generating reduced size or resolution image data for display so as to indicate the identities of the stored images.

21. A system according to claim 20, in which the image information comprises a reduced resolution reproduction of the stored image.

22. Apparatus according to claim 21, in which the reduced resolution image is derived by spatial sub-sampling ("thinning out"), with or without anti-alias processing.

23. A system according to claim 21, in which the image is encoded using a two-dimensional spatial transform such as the discrete cosine transform, Hadamard transform or Fourier transform, and the image information is derived using only the lower or lowest frequency transform components.

24. Image storage and/or filing and/or reproduction apparatus comprising means for reading image data and corresponding image filing data from storage means, in which the apparatus is operable in a first reproduction mode in which images are read and processed for display at a first resolution and/or color mode, and a second, higher speed, reproduction mode in which images are read and processed for display in a lower resolution and/or color mode.

25. Apparatus according to claim 24, in which the images are stored in a frequency domain representation, and in the second mode are reconstructed from only lower or lowest frequency image components.

26. An image storage and/or indexing and/or reproduction apparatus comprising means for reading a removable storage medium and means for generating index information relating to the images stored on said storage medium, further comprising means for sensing removal and replacement of said storage medium and means for automatically regenerating said index information in dependence thereon.

FIG. 1

EP 0 486 310 A2

START

READ ID INFORMATION OF TRACKS 1 TO 50.
STORE IT IN RAM 203 OF CONTROLLER 102
AND TRANSFER IT TO COMPUTER 110. — S1

SET OUTPUT OF SELECTOR 104 TO Y — S2

n ← 1 — S3

m ← 0 — S4

S5
TRACK n
NOT YET RECORDED?

YES

NO

m ← m + 1 — S6

REPRODUCE TRACK n.
A/D-CONVERTED DIGITAL
SIGNALS ARE THINNED OUT TO
1/5 IN THE SCANNING AND
SUBSCANNING DIRECTION. AND
STORED IN FIELD MEMORY 107. — S7

S8
FRAME
TO BE STORED?

NO

YES    S9

n ← n + 1    S10    n ← n + 2

S11
m : 10    =

≠

S12    S13
n > 50    SEND MULTI IMAGE
INFORMATION STORED IN
FIELD MEMORY 107 TO
COMPUTER 110.

NO

YES

F I G.   2 A    (A)

(A)

TRANSFER THE REMAINING MULTI IMAGE INFORMATION STORED IN FIELD MEMORY 107 TO COMPUTER 110.　S14

TO BE REPRODUCED?　S15

NO

YES　S16

REPRODUCTION PROCESS

END

S17

STILL VIDEO FLOPPY REPLACED?

NO

YES

TO STEP S1

# FIG. 2B

F I G. 3

F I G. 4

F I G. 5

F I G. 6

501

207a

205

210

207b

207

# F I G. 7A

501

205

210

207

# F I G. 7B

START

S31
STORAGE MEDIUM IS EXCHANGED? — NO

C → YES

S33
COMPRESSED DATA IS OUTPUT ? — YES

NO

S35
SELECT OUTPUT OF SEPARATOR 401

S37
PRODUCE INDEX DATA AND STORE INTO FIELD MEMORY 107

S39
ALL INDEX DATA HAVE BEEN STORED? — NO

YES

S41
TRANSFER INDEX DATA TO COMPUTER 110 VIA SCSI I/F 108

S43
RECEIVE COMMAND FROM COMPUTER 110 ? — NO

YES

B

S51
HIGH SPEED TRANSFER? — NO

YES

S53
SUPPLY OUTPUT OF SEPARATOR 401 TO SCSI I/F 108

S55
SUPPLY REPRODUCED OUTPUT OF REPRODUCER 501 TO SCSI I/F 108

S57
END? — NO

YES

F I G. 8A

F I G. 8B